# EUROPEAN PATENT SPECIFICATION

(11) **EP 2 644 679 B1**
(45) Date of publication and mention of the grant of the patent: **07.11.2018**
(21) Application number: 12744914.8
(22) Date of filing: 03.02.2012
(51) Int. Cl.: C09K 5/16, F28D 20/00

(54) **CHEMICAL HEAT ACCUMULATOR AND METHOD FOR PRODUCING SAME**
CHEMISCHER WÄRMESPEICHER UND VERFAHREN ZU SEINER HERSTELLUNG
ACCUMULATEUR DE CHALEUR CHIMIQUE ET PROCÉDÉ POUR SA PRODUCTION

(30) Priority: 10.02.2011 JP 2011027791; 30.08.2011 JP 2011186861
(43) Date of publication of application: 02.10.2013
(73) Proprietor: Kabushiki Kaisha Toyota Chuo Kenkyusho, Nagakute-shi, Aichi 480-1192 (JP)
(72) Inventor: AOKI Masakazu, Nagakute-shi, Aichi 480-1192 (JP); SHIMAZU Takashi, Nagakute-shi, Aichi 480-1192 (JP); YAMAUCHI Takafumi, Nagakute-shi, Aichi 480-1192 (JP); MATSUMOTO Mitsuru, Nagakute-shi, Aichi 480-1192 (JP)
(74) Representative: Kramer Barske Schmidtchen Patentanwälte PartG mbB
(86) International application number: PCT/JP2012/052462
(87) International publication number: WO 2012/108343

(56) References cited:
- JP-A- 1 212 893
- JP-A- 4 090 499
- JP-A- 2005 213 459
- JP-A- 2007 291 267
- JP-A- 2008 214 818
- JP-U- H0 655 066
- US-A- 5 585 174
- US-A1- 2008 051 279
- US-A1- 2008 257 530
- US-A1- 2011 005 267
- MIKIO KUMITA ET AL.: 'Enka Calcium Tenchaku Kyuchakuzai no Chosei to sono Suijoki Kyuchaku Tokusei' ABSTRACTS OF AUTUMN MEETING OF THE SOCIETY OF CHEMICAL ENGINEERS vol. 39TH, 2007, JAPAN, page D302, XP008170974
- VASILIEV,L.L. ET AL.: 'NaX zeolite, carbon fiber and CaCl2 ammonia reactors for heat pumps and refrigerators' ADSORPTION vol. 2, no. 4, 1996, pages 311 - 316, XP055124132
- VASILIEV,L.L. ET AL.: 'Activated carbon ammonia and natural gas adsorptive storage.' EXTENDED ABSTR PROGRAM BIENN CONF CARBON vol. 23RD, 1997, pages 334 - 335, XP055124145
- VASILIEV,L.L. ET AL.: 'Solar-gas solid sorption refrigerator' ADSORPTION vol. 7, no. 2, 2001, pages 149 - 161, XP055124146
- ZAJACZKOWSKI,B. ET AL.: 'New type of sorption composite for chemical heat pump and refrigeration systems' APPL THERM ENG vol. 30, no. 11-12, 2010, pages 1455 - 1460, XP027021246
- KEIKO FUJIOKA ET AL.: 'Tanso Zairyo o Mochiita Chemical Heat Pump Hanno-so no Dennetsu Tokusei' ABSTRACTS OF AUTUMN MEETING OF THE SOCIETY OF CHEMICAL ENGINEERS vol. 38TH, 2006, JAPAN, page P305, XP008170975

## Description

### [Technical Field]

The present invention relates to a chemical heat accumulator that uses ammonia or other appropriate substance as working fluid, and to a production method for the same.

### [Background Art]

In recent years, where emission reduction of carbon dioxide (CO₂) is strongly required, research and development are being actively carried out for improving energy efficiency and saving energy. Some of them are directed to a heat accumulating system which can make efficient use of waste heat (or exhaust heat) and other waste energy generated from various types of machines and plants. Especially promising is a chemical heat accumulating system because it has a large storage of heat per volume and is capable of heat accumulation for long period of time. As specific examples thereof, Patent Literature 1 (PTL 1) and other literature below propose systems which utilize endothermic heat due to dehydration reaction of calcium hydroxide and exothermic heat due to hydration reaction of calcium oxide.

In order to utilize general dehydration reaction, however, a certain level of high temperature source is required. Accordingly, a chemical heat accumulating system is required which can operate within a lower temperature region to efficiently recover waste heat and other waste energy within the lower temperature region and further improve the energy efficiency. In this regard, a chemical heat accumulating system is proposed that utilizes a reaction (ammine complex formation reaction) between ammonia, which is easy to turn into gas, and metal chloride (such as CaCl₂ and NiCl₂). Descriptions relevant to this are disclosed in Patent Literature 2 to 4 below. Note, however, that Patent Literature 5 below relates to an ammonia storage merely for the purpose of storage of ammonia rather than a heat accumulator.

### [Citation List]

### [Patent Literature]

[PTL 1]
   Japanese Unexamined Patent Application Publication No. 2009-257698
[PTL 2]
   Japanese Unexamined Patent Application Publication No. 5-264187
[PTL 3]
   Japanese Unexamined Patent Application Publication No. 6-109388
[PTL 4]
   Japanese Unexamined Patent Application Publication No. 6-136357
[PTL 5]
   WO2010/025948

US 2008/051279 A1 relates to a monolith comprising zeolite, thermally conductive material, and a binder, wherein said material has a room temperature thermal conductivity greater than 100 W/m · K.

US 2011/005267 A1 relates to an adsorber unit for an adsorption heat pump, comprising a thermally insulated outer shell with a first end and a second end, a first and second thermally insulated plenum having the first plenum attached to the first end of the outer shell and the second plenum attached to the second end of the outer shell, wherein each plenum has at least one opening, a plurality of thermally conductive tubes aligned longitudinally inside the shell, wherein each tube comprises a plurality of projections extending from the outside of the tube and projecting outwardly therefrom, wherein each tube has a first and second ends, and wherein the first of each tube is attached to the first plenum, and the second end of the tube is attached to the second plenum, at least one solid absorbent inside the shell surrounding the tubes, and at least one refrigerant capable of being adsorbed and desorbed by the adsorbent inside the outer shell, wherein the outer shell, the first and second plenums, and the outside surfaces of the tubes form a closed system for containment of the absorbent and the refrigerator.

US 5,585,174 A relates to a heat-accumulating material comprising a thermally stable, porous matrix having an outer surface containing open pores and having impregnated in said open pores of said porous matrix a thermosensitive active ingredient having reversible dehydration/hydration with a gaseous atmosphere thereby absorbing heat during dehydration of giving off heat during hydration, said porous matrix being in the form of granulated or powdery porous particles of 1 to 5000 µm in size of inorganic, polymer, carbon or metal materials having open pores of less than 100 nm in size, said active ingredient being a crystallohydrate having the ability of releasing chemically bound water during said dehydration or absorbing chemically bound water during said hydration, and the pores of said thermally stable matrix being open to the surrounding atmosphere at the outer surface of said matrix and enabling the active ingredient contained in and communicating with said pores and exposed to the gaseous atmosphere during said dehydration/hydration.

US 2008/0257530 A1 relates to a sorber heat exchanger wall having a fluid side to which a heat-emitting or heat-absorbing fluid is applied and which is bounded by a fluid wall, and a sorption side which has a sorption bed with a sorbent which accumulates a sorbate while absorbing or emitting heat, wherein the sorption bed comprises a supporting structure for the sorbent which is a good conductor of heat and which is connected to the fluid wall in a thermally conductive fashion.

M. Kumita et al., Abstracts of Autumn Meeting of the Society of Chemical Engineers, vol. 39TH, 2007, page D302, relates to a CaCl₂/carbon fiber composite.

JP 1-212893 A relates to a heat storage body including a cloth or felt of carbon fibers and a heat storage material dispersed in the voids of the cloth or felt.

JP 4-090499 A relates to a heat accumulation device.

### [Summary of Invention]

### [Technical Problem]

Meanwhile, it is important for a chemical heat accumulating system to smoothly exchange the reaction heat with the external of system and stably continue the exothermic reaction or the endothermic reaction. In this respect, chemical heat accumulating systems as disclosed in the above Patent Literature and other literature utilize powder-like CaCl₂ or other substance as the chemical heat accumulating material without modification, so that retention of reaction heat may be likely to occur and the operation may possibly be unstable.

In addition, even in the case of using a chemical heat accumulator obtained by forming the powder-like heat accumulating material, volume expansion and volume contraction are repeated due to storage and release of ammonia thereby to possibly result in cracks and/or breakages in the chemical heat accumulator, and the chemical heat accumulating material may be ultimately powdered. Also in this case, the chemical heat accumulating system will be difficult to be stably operated. Such problems are serious especially when trying to provide down-sized and high-output chemical heat accumulating systems.

The present invention has been created in view of such circumstances, and objects of the present invention include providing a chemical heat accumulator which can obtain a high heat output while stably operating a chemical heat accumulating system that uses ammonia or other appropriate substance as working fluid, as well as providing a production method, suitable for the same, for a chemical heat accumulator.

### [Solution to Problem]

As a result of intensive studies to solve such problems and repeating trial and error, the present inventors have newly found out that a high output chemical heat accumulator can be obtained which uses carbon fiber to hold the chemical heat accumulating material (heat accumulating particles) comprised of metal chloride thereby to allow for stably performing store or release of ammonia. Developing this achievement, the present invention has been accomplished as will be described hereinafter.

### «Chemical heat accumulator»

(1) The present invention provides a chemical heat accumulator as claimed in claim 1.
(2) The chemical heat accumulator of the present invention comprises a compact (further a calcined substance obtained by calcining the compact) of a mixture of heat accumulating particles of metal chloride as a chemical heat accumulating material and carbon fiber. Existence of this carbon fiber causes the chemical accumulator of the present invention to have excellent mechanical strength and to be prevented from easily cracking or other troubles even if absorption and desorption reactions with ammonia are repeated.

In addition, carbon fiber has high thermal conductivity. More specifically, carbon fiber has higher thermal conductivity than that of the heat-accumulating particles. Therefore, the heat generated in the heat accumulating particles can be efficiently transferred outside the system via the carbon fiber thereby to enable exothermic action, whereas the heat outside the system can be effectively transferred to the heat accumulating particles via the carbon fiber thereby to enable endothermic action. Consequently, the exothermic reaction or the endothermic reaction in the heat accumulating particles is stably continued thereby to allow for the chemical heat accumulator of the present invention to maintain a high heat output.

Furthermore, carbon fiber not merely has high thermal conductivity but has superior thermal conductive property in the heat flow direction. Accordingly, in the chemical heat accumulator in which carbon fiber is oriented in a certain direction, the heat conductivity in the orientation direction becomes significantly high depending on the degree of orientation. Therefore, the orientation direction and/or the degree of orientation of the carbon fiber may be adjusted to control the heat flow direction and/or the heat output of the chemical heat accumulator.

Note that the chemical heat accumulator of the present invention comprises a compact of heat accumulating particles of metal chloride as a chemical heat accumulating material and carbon fiber as a binder, and thus has a high degree of freedom in its shape and also has features including that the porosity can be easily adjusted, which would affect the absorption and desorption reactions of ammonia.

The reason is not necessarily sure that the holding ability for the heat accumulating particles comprised of metal chloride is stably maintained when carbon fiber is used herein as the binder. It may be considered under present circumstances that carbon fiber dispersed in the chemical heat accumulator intertangles to form a framework structure, and the heat accumulating particles are held in interspaces within the framework. It may also be considered that this frame structure of carbon fiber prevents the chemical heat accumulator from collapse or the like and allows for developing excellent mechanical strength.

### «Production method for chemical heat accumulator»

The present invention is perceived not only as the above-described chemical heat accumulator but as a production method for the same.
(1) That is, the present invention provides a method for producing a chemical heat accumulator according to claim 7.
(2) According to the production method of the present invention, the chemical heat accumulating material and the binder are mixed using the dispersion medium. Therefore, even in the case where carbon fiber, which is long and thin and thus likely to be broken, is used as the binder, the form and property thereof may not be negatively affected, and the mixture can be obtained in which the heat accumulating particles as the heat accumulating material and the carbon fiber are homogeneously mixed.

Note that the metal chloride, i.e. SrCl₂, which constitutes the heat accumulating particles, is reactive with water to deliquesce or generate undesirable substances. Accordingly, the dispersion medium for use therewith is preferred to be one that includes little water, such as organic dispersion medium. More specifically, the water concentration in the dispersion medium is preferably 0.7% or less, and more preferably 0.3% or less. Note also that the "water concentration" as used herein is volume% of water included in whole of the dispersion medium (100 volume%). It should be appreciated that the deliquescence of the heat accumulating particles of SrCl₂ depends on the relative water amount (amount of water vapor).

### «Others»

(1) Note that the chemical heat accumulator may contain inevitable impurities that are difficult to be removed for the cost or technical reason.
(2) The form of the chemical heat accumulator (calcined substance) may be, such as, but not limited to, sheet-like, plate-like, bulk-like, rod-like, or tube-like. Furthermore, the chemical heat accumulator of the present invention may be a material before being processed or a final product (component).
(3) Unless otherwise stated, a numerical range "x to y" as used herein includes the lower limit value x and the upper limit value y. Freely selecting or extracting various numerical values or any numerical values included in numerical ranges described herein as a new lower limit value or upper limit value, a newly-created numerical range such as "a to b" may be possible.

### [Brief Description of Drawings]

[Fig. 1]

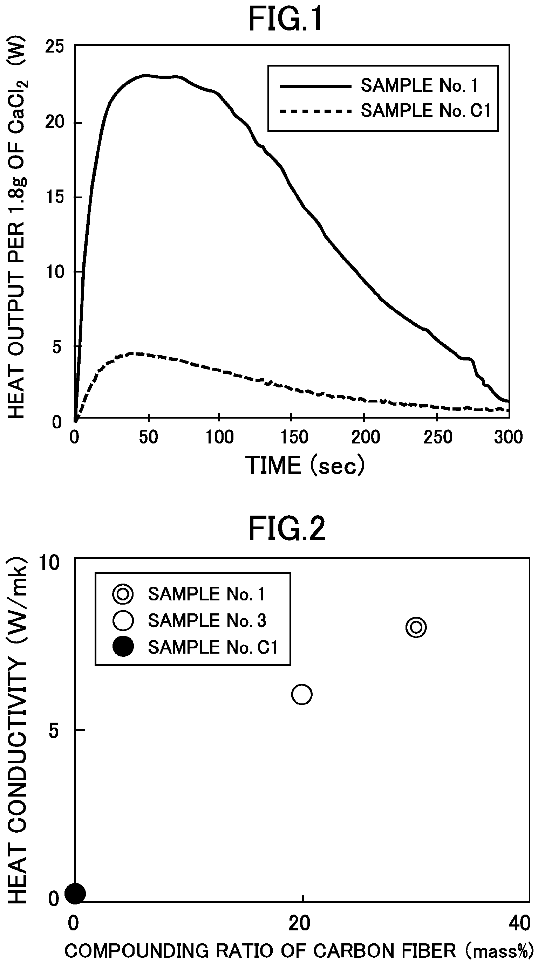

   Fig. 1 is a graph illustrating change with time in the heat output of chemical heat accumulators according to Sample No. 1 and Sample No. C1.
[Fig. 2]
   Fig. 2 is a graph illustrating the heat conductivity of each sample (chemical heat accumulator).
[Fig. 3]

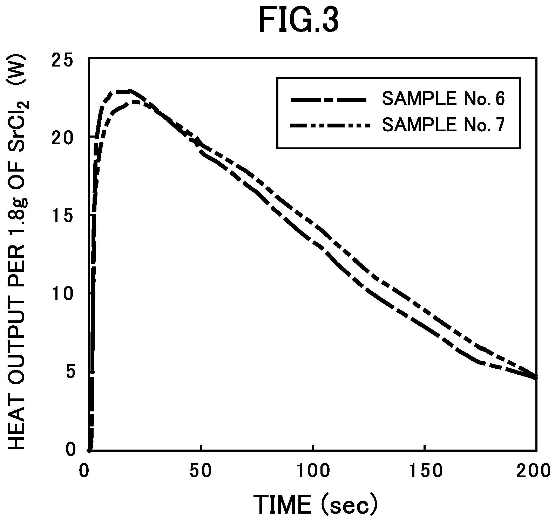

   Fig. 3 is a graph illustrating change with time in the heat output of chemical heat accumulators according to Sample No. 6 and Sample No. 7.

### [Description of Embodiments]

The present invention will be described more in detail with reference to embodiments of the invention. One or more constitutions freely selected from the description herein may be added to the above-described present invention. The contents described herein may be appropriately applied not only to a chemical heat accumulator but also to a production method for the same. Entities regarding a production method, when understood as a product-by-process, may also be entities regarding a product. Whether or not which embodiment is the best is different in accordance with objectives, required properties and other factors.

### «Chemical heat accumulator»

The chemical heat accumulator of the present invention basically comprises: heat accumulating particles comprised of metal chloride; and a binder, comprised of carbon fiber, which holds the heat accumulating particles.

### (1) Heat accumulating particles

The heat accumulating particles according to the present invention are SrCl₂.

The form of the heat accumulating particles (particle shape, particle diameter, etc) is not particularly limited. That is, the particle shape may be spherical shape or oval spherical shape. The particle diameter may preferably be, but not limited to, within a range of 1 µm to 1 mm when observed through electron microscope.

### (2) Binder

The binder according to the present invention is carbon fiber. The raw material and the production method for the carbon fiber and the form or other properties of the carbon fiber are not particularly limited. For example, PAN-based carbon fiber made of acrylic fiber or PITCH-based carbon fiber made of pitch may be available. In addition, the fiber diameter, fiber length and other factors of the carbon fiber may be appropriately selected depending on the form of the heat accumulating particles and the form of the chemical heat accumulator. For example, the fiber diameter is preferably within a range of 0.1 to 30 µm, and more preferably within a range of 1 to 15 µm. Further, the average fiber length is preferably within a range of 0.01 to 5 mm, and more preferably within a range of 0.1 to 3 mm. If they are unduly small, then the heat conductivity and the holding ability for the heat accumulating particles are deteriorated, while on the other hand, if they are unduly large, then the mixing ability with the heat accumulating particles and other properties are deteriorated. Note that the fiber length is determined by observation through optical microscope or electron microscope and the average fiber length thereof is a length when the cumulative frequency is 50% of the entirety.

Higher heat conductivity of the carbon fiber is more preferred, but ones with unduly high heat conductivity are not necessarily required because of high cost. In this regard, the heat conductivity of the carbon fiber is preferably within a range of 100 to 1,500 W/mK, more preferably within a range of 200 to 1,000 W/mK, and most preferably within a range of 300 to 950 W/mK.

When whole of the mixture of the chemical heat accumulating material and the binder (more specifically, the mixture of the heat accumulating particles and the carbon fiber) is 100 mass%, the carbon fiber is within a range of 5 to 45 mass%, and preferably within a range of 8 to 42 mass%. Unduly low content of the carbon fiber cannot sufficiently ensure the holding ability for the heat accumulating particles, the strength of the chemical accumulator, and other properties, while on the other hand, if the content is unduly high, then the content of the heat accumulating particles becomes relatively unduly low thereby to result in disadvantages such as that the amount of heat storage or heat generation (i.e. heat output) per unit volume (unit mass) of the chemical heat accumulator may be reduced and cracks and/or breakages may be likely to occur.

Summarizing the above, it is preferred that the carbon fiber to be used as the binder is such that the fiber diameter is 0.1 to 30 µm, the average fiber length is 0.01 to 5 mm, the heat conductivity is 100 to 1,500 W/mK, and the compounding ratio is 1 to 49 mass%.

Note that the reason why the chemical heat accumulator requires a high heat conductivity is as follows. Properties of a chemical heat accumulating system depend on the reaction rate of the chemical heat accumulator and ammonia. This reaction rate is affected by (i) the infiltration rate of ammonia gas into the chemical heat accumulator (absorption rate, release rate), (ii) the formation rate of ammine complex, and (iii) the heat exchange rate between the chemical heat accumulator and the external. Among them, the heat exchange rate is rate-determining and considerably affects the properties of the chemical heat accumulating system. In this regard, the chemical heat accumulator of the present invention, in which the high heat conductivity material (including carbon fiber) having excellent heat conductivity and heat transfer ability is present with proper quantity, enhances the heat exchange rate and thus improves the properties of the chemical heat accumulating system.

### «Production method»

Production method for the chemical heat accumulator of the present invention basically comprises a mixing step that mixes the above-described heat accumulating particles of SrCl₂ with carbon fiber, and a forming step that pressurizes and forms the obtained mixture, and preferably further comprises a calcination step that heats the compact and causes it to be a calcined substance.

### (1) Mixing step

According to the mixing step in the present invention, from dispersion liquid obtained by dispersing in a dispersion medium the carbon fiber and the heat accumulating particles of SrCl₂, the dispersion medium is removed thereby causing the mixture to be obtained. This allows for homogeneous mixture with the heat accumulating particles without damaging the long and thin carbon fiber (i.e. having large aspect ratio). Note that mixing like the above may also be possible by using a mixer for rotation and/or revolution of a container filled with the carbon fiber and the heat accumulating particles of SrCl₂.

Although types of dispersion media to be used in the above operation are not particularly limited, preferred ones are easy to be removed by volatilization and the like and to be commonly available. Preferable examples thereof include organic dispersion media, such as acetone, heptane, hexane, and toluene.

When the heat accumulating particles and the carbon fiber are stirred and mixed in the dispersion medium, a stirrer or other appropriate equipment is preferably used for the purpose of homogeneity. The removal of the dispersion medium is preferably performed by filtration. The atmosphere where these operations are performed is preferably under a low-humidity environment.

### (3) Forming step

The forming step may involve pressurization forming where the mixture is put into the cavity of a forming tool, or compression forming using rollers etc rather than using the forming tool. Any suitable method may be employed depending on the desired shape of the chemical heat accumulator.

The forming pressure during the above operation is preferably within a range of 40 to 300 MPa, and more preferably within a range of 70 to 250 MPa, for example. Unduly lower forming pressure leads to decrease in the heat output per volume and/or deterioration of the mechanical strength, while unduly higher forming pressure results in damages of the carbon fiber or other undesirable problems, in both which cases stably high heat output cannot be obtained. Note that this forming step may also be preferably performed under a low-humidity environment.

### (3) Calcination step

The production method of the present invention preferably further comprises the calcination step that calcine the compact. This causes strong bonding among the carbon fibers or between the carbon fibers and the heat accumulating particles, so that a high strength chemical heat accumulator can be obtained. Note that this calcination step may or may not cause the heat accumulating particles to be sintered therebetween.

In consideration of the heat resistance and other properties of the carbon fiber, the calcining temperature is preferably within a range of 100 to 300 degrees C, and more preferably within a range of 150 to 250 degrees C. If the calcining temperature is unduly low, then strong calcined substance (chemical heat accumulator) is unlikely to be obtained, while on the other hand, if the calcining temperature is unduly high, then the sintering among the heat accumulating particles excessively progresses to block the infiltration of ammonia gas into the chemical heat accumulator, thus being undesirable. Note that this calcination step may also be preferably performed under a low-humidity environment. In addition, the calcination step may be preferably performed in vacuum of 1,000 Pa or less, and more preferably 100 Pa or less. This is because the heat accumulating particles are prevented from deteriorating due to the reaction with the atmospheric components.

It is to be noted that the "low-humidity environment" as used herein is preferably such that the water concentration in the atmosphere is 0.7% or less, 0.3% or less, and further 0.1% or less in terms of volume fraction.

### «Use application»

The chemical heat accumulator of the present invention, when incorporated in a known reactor to operate, may effectively recover even relatively low temperature waste heat and the like, and may obtain heat output as necessary. Note, however, that the operating temperature range and other environmental factors for the chemical heat accumulator of the present invention are not limited in any way.

### [Examples]

The present invention will be more specifically described with reference to examples. In the following, examples including CaCl₂ as the heat accumulating particles are provided for comparative purposes only.

### «Example 1: Samples No. 1 to No. 5»

### (1) Raw material

For each chemical heat accumulating material (heat accumulating particles), CaCl₂ (alkaline earth metal chloride) was prepared. Product, C4901, available from Sigma-Aldrich Co. LLC. was used therefor. The form thereof was granular powder.

Carbon fiber (XN-100 available from Nippon Graphite Fiber Corporation) was then prepared as each binder. This carbon fiber was pitch-based carbon fiber with a heat conductivity of 900 W/mK and a fiber diameter of 10 µm. The average fiber length thereof is presented in Table 1.

### (2) Mixing step

These raw materials were dispersed in acetone (dispersion medium) with water concentration of 0.25%, and dispersion liquid was thus obtained. Compounding ratio of each raw material is presented in Table 1. The water concentration in acetone herein was determined by gas chromatographic method. Further, each compounding ratio presented in Table 1 is a mass ratio (mass%) of the carbon fiber to the whole of the heat accumulating particles and the binder (100 mass%).

The above dispersion liquid was filtrated under reduced pressure to remove the dispersion medium, and the mixture (complex) consisting only of CaCl₂ and carbon fiber was obtained.

### (3) Forming step and calcination step

The mixtures were formed under various forming pressures as represented in Table 1, and some of the obtained calcined substances were calcined. Sheet-like calcined substances were thus obtained with a size of 15 mm×15 mm×3 mm.

Unless otherwise stated, the above-described mixing step and forming step were performed under low-humidity environment of water concentrations of 0.1% and 0.1 ppm using a glove box available from MIWA MFG CO., LTD. Further, the calcination step was performed in a vacuum processing furnace with 1 Pa or less.

### «Samples No. C1 to No. C3»

### (1) Sample No. C1

The above-described CaCl₂ was solely pressurized and formed under low-humidity environment of water concentration of 0.1 ppm and the forming pressure presented in Table 1. Sheet-like compact was thus obtained with a size of 15 mm×15 mm×3 mm.

### (2) Sample No. C2

The same CaCl₂ was caused to store NH₃ within a room temperature region and then vacuum evacuated, and CaCl₂·2NH₃ was thus obtained. This was pressurized and formed under the previously-described low-humidity environment and the forming pressure presented in Table 1. Sheet-like compact was thus obtained with a size of 15 mm×15 mm×3 mm.

### (3) Sample No. C3

The same CaCl₂ was mixed with alumina (Al₂O₃: AS-20 available from Showa Denko K.K.) as the high heat conductivity material. This mixing was manually performed using a mortar. The alumina content in the mixture powder was 30 mass% relative to the 100 mass% of the whole. This mixture powder was pressurized and formed under the previously-described low-humidity environment and the forming pressure presented in Table 1. Sheet-like compact was thus obtained with a size of 15 mm×15 mm×3 mm.

### «Evaluation of samples»

### (1) Appearance

The appearance of each obtained sample was observed, and results are also presented in Table 1. Samples No. 1 to No. 4, which each contained proper quantity (less than 50 mass%) of carbon fiber, were recognized to have excellent mechanical strength (shape retaining ability) without appearance of breakages and cracks.

### (2) Test

The calcined substance of Sample No. 1 and the compact of No. C1 were chambered in respective heat exchangeable reactors to react with ammonia gas under 0.4 MPa and 7 degrees C, and the heat output (W) per 1.8 g of CaCl₂ was measured. Those results are shown in Fig. 1. In addition, the heat conductivity in the thickness direction (heat flow direction) was measured for each of Samples No. 1, No. 3 and No. C1 using steady-state method. Those results are shown in Fig. 2.

Note that breakages had occurred in the chemical heat accumulators of Samples No. C1 to No. C3, so evaluation using reactors was unnecessary, but only the chemical heat accumulator of Sample No. C1 was evaluated for reference. Note also that the reactors used herein were stainless-steel reactors with internal capacity of 250 cc and provided with valves and pressure gauges for supply and evacuation of ammonia gas.

### (3) Performances

From the results shown in Fig. 1, the chemical heat accumulator of Sample No. 1 was confirmed to have excellent reactivity with ammonia gas thereby allowing the high heat output to be stably obtained. However, Sample No. C1, not including carbon fiber, had lower heat output and were unstable, and collapsed to be powdered when storing ammonia. In addition, from the results shown in Fig. 2, the heat conductivities in thick direction of Sample No. 1 and Sample No. 3 were confirmed to considerably improve relative to that of Sample No. C1.

### «Example 2: Sample No. 6 and Sample No. 7» (according to the present invention)

### (1) Sample No. 6

Strontium chloride hexahydrate (SrCl₂·6H₂O; 197-04185 available from Wako Pure Chemical Industries, Ltd.) and the previously-described carbon fiber (average fiber length; 0.25 mm) were mixed under a low-humidity environment where water concentration was 0.25%. This mixing was performed using a planetary centrifugal mixer (ARE-310 available from THINKY CORPORATION). The compounding ratio of the carbon fiber was 17 mass% relative to 100% of the whole mixture.

This mixture was formed under a forming pressure of 0.7 tonf/cm² (68.6 MPa). The compact obtained was calcined at 170 degrees C under a low-humidity environment where water concentration was 100 ppm or less. A sheet-like calcined substance (chemical heat accumulator) was thus obtained with a size of 15 mm×15 mm×3 mm. Note that the low-humidity environment was achieved using the previously-described glove box.

### (2) Sample No. 7

Anhydrous strontium chloride (SrCl₂; 439665 available from Sigma-Aldrich Co. LLC.) as the chemical heat accumulating material (heat accumulating particles) and the carbon fiber like in Sample No. 6 were dispersed and mixed in acetone as previously described, and a mixture removed therefrom acetone was obtained. The compounding ratio of the carbon fiber was 26 mass%.

Using the mixture obtained, forming and calcining like those for Sample No. 6 were performed, and a sheet-like calcined substance (chemical heat accumulator) was thus obtained.

### «Evaluation of samples»

### (1) Appearance

Both the obtained calcined substances of Sample No. 6 and Sample No. 7 were recognized to have excellent mechanical strength (shape retaining ability) without breakages, cracks and other defects.

### (2) Test

These calcined substance were chambered in the previously-described respective heat exchangeable reactors to react with ammonia gas under the same conditions, and the heat output (W) per 1.8 g of SrCl₂ was measured. Those results are shown in Fig. 3.

### (3) Performances

From the results shown in Fig. 3, the chemical heat accumulators comprised respectively of Sample No. 6 and Sample No. 7 were confirmed to have excellent reactivity with ammonia gas thereby allowing the high heat output to be stably obtained.

**[Table 1]**

| Sample No. | Mixing step | | | | | Forming step | | Calcining step | | Appearance |
|---|---|---|---|---|---|---|---|---|---|---|
| | Raw material | | | | Water concentration in atmosphere | Forming pressure (Mpa) | Water concentration in atmosphere | Calcining temperature (°C) | Atmosphere | |
| | Heat accumulating particles | Binder | | | | | | | | |
| | | Type | Average fiber length (mm) | Compounding ratio (mass%) | | | | | | |
| 1 | CaCl₂ | Carbon fiber | 0.6 | 30 | 0.1% | 68.6 | 0.1 ppm | 170 | Vacuum (1 Pa or less) | Excellent (no crack and breakage) |
| 2 | | | 0.25 | 10 | | | | | | |
| 3 | | | | 20 | | | | | | |
| 4 | | | | 40 | | 176.4 | | | | |
| 5 | | | | 50 | | | | | | Considerable number of breakages present |
| C1 | CaCl₂ | - | | | - | 196 | 0.1 ppm | - | | Breakage partially present |
| C2 | CaCl₂·2NH₃ | | | | | | | | | |
| C3 | CaCl₂ | Alumina | - | 30 | 0.1 ppm | | | | | |

## Claims

1. A chemical heat accumulator being a compact of a mixture in which heat accumulating particles that become exothermic or endothermic due to storage or release of ammonia as a working fluid are mixed with a binder that holds the heat accumulating particles, wherein
the heat accumulating particles are SrCl₂,
the binder is carbon fiber having higher thermal conductivity than that of the heat-accumulating particles,
the carbon fiber is of 5 to 45 mass% when whole of the mixture is of 100 mass%, and the chemical heat accumulator consists of the heat accumulating particles, the binder, and inevitable impurities.

2. The chemical heat accumulator as set forth in claim 1, wherein the carbon fiber has an average fiber length of 0.01 to 5 mm.

3. The chemical heat accumulator as set forth in claim 1 or 2, wherein the carbon fiber has a thermal conductivity of 100 W/mK or more.

4. The chemical heat accumulator as set forth in either one of claims 1 to 3, comprising a calcined substance obtained by further calcining the compact.

5. The chemical heat accumulator as set forth in either one of claims 1 to 4, having a sheet-like form.

6. The chemical heat accumulator as set forth in either one of claims 1 to 5, wherein the carbon fiber is oriented in a heat flow direction.

7. A method for producing a chemical heat accumulator, the method comprising:
a mixing step that obtains a mixture in which heat accumulating particles that become exothermic or endothermic due to storage or release of ammonia as a working fluid are mixed with a binder that holds the heat accumulating particles; and
a forming step that obtains a compact in which the mixture is pressurized and formed, wherein
the heat accumulating particles are SrCl₂,
the binder is carbon fiber having higher thermal conductivity than that of the heat-accumulating particles,
the carbon fiber is of 5 to 45 mass% when whole of the mixture is of 100 mass%, and
the chemical heat accumulator consists of the heat accumulating particles, the binder, and inevitable impurities.

8. The method for producing a chemical heat accumulator as set forth in claim 7, wherein the mixing step is a step that, after mixing the heat accumulating particles and the binder in a dispersion medium, removes the dispersion medium to obtain the mixture.

9. The method for producing a chemical heat accumulator as set forth in claim 7 or 8, wherein the forming step is such that a forming pressure is 40 to 300 MPa.

10. The method for producing a chemical heat accumulator as set forth in either one of claims 7 to 9, further comprising a calcination step that obtains a calcined substance in which the compact is calcined.

11. The method for producing a chemical heat accumulator as set forth in claim 10, wherein the calcination step is such that a calcining temperature is 100 to 300 degrees C.

12. The method for producing a chemical heat accumulator as set forth in either one of claims 7 to 11, wherein each step is performed under a low-humidity environment where water concentration is 0.7% or less.

## Patentansprüche

1. Chemischer Wärmespeicher, wobei es sich um einen Presskörper aus einem Gemisch handelt, in dem Wärmespeicherteilchen, die aufgrund eines Speicherns oder Freisetzens von Ammoniak als Arbeitsfluid exotherm oder endotherm werden, mit einem Bindemittel gemischt sind, das die Wärmespeicherteilchen hält, wobei
die Wärmespeicherteilchen SrCl₂ sind,
es sich bei dem Bindemittel um Kohlefasern mit einer höheren Wärmeleitfähigkeit als diejenige der Wärmespeicherteilchen handelt,
5 bis 45 Massen-% der Kohlefasern vorliegen, wenn die Gesamtheit des Gemischs 100 Massen-% beträgt, und
der chemische Wärmespeicher aus den Wärmespeicherteilchen, dem Bindemittel und unvermeidbaren Verunreinigungen besteht.

2. Chemischer Wärmespeicher nach Anspruch 1, bei dem die Kohlefasern eine durchschnittliche Faserlänge von 0,01 bis 5 mm aufweisen.

3. Chemischer Wärmespeicher nach Anspruch 1 oder 2, bei dem die Kohlefasern eine Wärmeleitfähigkeit von 100 W/m · K oder mehr aufweisen.

4. Chemischer Wärmespeicher nach einem der Ansprüche 1 bis 3, umfassend eine kalzinierte Substanz, die durch weiteres Kalzinieren des Presskörpers erhalten wird.

5. Chemischer Wärmespeicher nach einem der Ansprüche 1 bis 4, der eine lagenartige Form aufweist.

6. Chemischer Wärmespeicher nach einem der Ansprüche 1 bis 5, bei dem die Kohlefasern in einer Wärmeflussrichtung orientiert sind.

7. Verfahren zur Herstellung eines chemischen Wärmespeichers, wobei das Verfahren umfasst:
einen Mischschritt, bei dem ein Gemisch erhalten wird, in dem Wärmespeicherteilchen, die aufgrund eines Speicherns oder Freisetzens von Ammoniak als Arbeitsfluid exotherm oder endotherm werden, mit einem Bindemittel gemischt sind, das die Wärmespeicherteilchen hält; und
einen Formschritt, bei dem ein Presskörper erhalten wird und bei dem das Gemisch mit Druck beaufschlagt und geformt wird, wobei
die Wärmespeicherteilchen SrCl₂ sind,
es sich bei dem Bindemittel um Kohlefasern mit einer höheren Wärmeleitfähigkeit als diejenige der Wärmespeicherteilchen handelt,
5 bis 45 Massen-% der Kohlefasern vorliegen, wenn die Gesamtheit des Gemischs 100 Massen-% beträgt, und
der chemische Wärmespeicher aus den Wärmespeicherteilchen, dem Bindemittel und unvermeidbaren Verunreinigungen besteht.

8. Verfahren zur Herstellung eines chemischen Wärmespeichers nach Anspruch 7, bei dem der Mischschritt ein Schritt ist, bei dem nach dem Mischen der Wärmespeicherteilchen und des Bindemittels in einem Dispersionsmedium das Dispersionsmedium zum Erhalten des Gemischs entfernt wird.

9. Verfahren zur Herstellung eines chemischen Wärmespeichers nach Anspruch 7 oder 8, bei dem der Formschritt derart ist, dass ein Formdruck 40 bis 300 MPa beträgt.

10. Verfahren zur Herstellung eines chemischen Wärmespeichers nach einem der Ansprüche 7 bis 9, das ferner einen Kalzinierungsschritt umfasst, bei dem eine kalzinierte Substanz erhalten wird und bei dem der Presskörper kalziniert wird.

11. Verfahren zur Herstellung eines chemischen Wärmespeichers nach Anspruch 10, bei dem der Kalzinierungsschritt derart ist, dass die Kalzinierungstemperatur 100 bis 300 °C beträgt.

12. Verfahren zur Herstellung eines chemischen Wärmespeichers nach einem der Ansprüche 7 bis 11, bei dem jeder Schritt in einer Umgebung mit geringer Feuchtigkeit durchgeführt wird, bei der die Wasserkonzentration 0,7 % oder weniger beträgt.

## Revendications

1. Accumulateur de chaleur chimique étant un comprimé d'un mélange dans lequel des particules accumulant de la chaleur qui deviennent exothermiques ou endothermiques en raison du stockage ou de la libération d'ammoniac en tant que fluide de travail sont mélangées avec un liant qui retient les particules accumulant de la chaleur, dans lequel
les particules accumulant de la chaleur sont SrCl₂,
le liant est une fibre de carbone ayant une conductivité thermique supérieure à celle des particules accumulant de la chaleur,
la fibre de carbone représente de 5 à 45% en masse lorsque la totalité du mélange représente 100% en masse, et
l'accumulateur de chaleur consiste en les particules accumulant de la chaleur, le liant et les impuretés inévitables.

2. Accumulateur de chaleur chimique selon la revendication 1, dans lequel la fibre de carbone a une longueur de fibre moyenne de 0,01 à 5 mm.

3. Accumulateur de chaleur chimique selon la revendication 1 ou 2, dans lequel la fibre de carbone a une conductivité thermique de 100 W/mK ou plus.

4. Accumulateur de chaleur chimique selon l'une quelconque des revendications 1 à 3, comprenant une substance calcinée obtenue en calcinant davantage le comprimé.

5. Accumulateur de chaleur chimique selon l'une des revendications 1 à 4, présentant une forme de type feuille.

6. Accumulateur de chaleur chimique selon l'une quelconque des revendications 1 à 5, dans lequel la fibre de carbone est orientée dans une direction d'écoulement de chaleur.

7. Procédé de production d'un accumulateur de chaleur chimique, le procédé comprenant :
une étape de mélange qui obtient un mélange dans lequel des particules accumulant de la chaleur qui deviennent exothermiques ou endothermiques en raison du stockage ou de la libération d'ammoniac en tant que fluide de travail sont mélangées avec un liant qui retient les particules accumulant de la chaleur; et
une étape de formage qui permet d'obtenir un comprimé dans lequel le mélange est pressurisé et formé, dans lequel
les particules accumulant de la chaleur sont SrC12,
le liant est une fibre de carbone ayant une conductivité thermique supérieure à celle des particules accumulant de la chaleur,
la fibre de carbone est de 5 à 45% en masse lorsque la totalité du mélange représente 100% en masse et
l'accumulateur de chaleur chimique consiste en les particules accumulant de la chaleur, le liant et les impuretés inévitables.

8. Procédé de production d'un accumulateur de chaleur chimique selon la revendication 7, dans lequel l'étape de mélange est une étape qui, après avoir mélangé les particules accumulant de la chaleur et le liant dans un milieu de dispersion, élimine le milieu de dispersion pour obtenir le mélange.

9. Procédé de production d'un accumulateur de chaleur chimique selon la revendication 7 ou 8, dans lequel l'étape de formation est telle qu'une pression de formage est de 40 à 300 MPa.

10. Procédé de production d'un accumulateur de chaleur chimique selon l'une quelconque des revendications 7 à 9, comprenant en outre une étape de calcination qui permet d'obtenir une substance calcinée dans laquelle le comprimé est calciné.

11. Procédé de production d'un accumulateur de chaleur chimique selon la revendication 10, dans lequel l'étape de calcination est telle qu'une température de calcination est de 100 à 300 degrés C.

12. Procédé de production d'un accumulateur de chaleur chimique selon l'une quelconque des revendications 7 à 11, dans lequel chaque étape est réalisée dans un environnement à faible humidité où la concentration d'eau est de 0,7% ou moins.
